# EUROPEAN PATENT APPLICATION

(11) **EP 4 015 310 A1**
(43) Date of publication of application: **22.06.2022**
(21) Application number: 21215527.9
(22) Date of filing: 17.12.2021
(51) Int. Cl.: B60Q 1/32, B60Q 1/30, B60Q 1/26, F21S 45/10, B60Q 1/00, F21W 103/15

(54) **ATTACHABLE SIDE LIGHT FOR A MOTOR VEHICLE-CONNECTABLE TRAILER OR TOWED DEVICE**

(30) Priority: 17.12.2020 FI 20204172 U
(71) Applicant: JN QualityExpert Oy, 76150 Pieksämäki (FI)
(72) Inventor: NYKÄNEN, Johanna, FI-76150 Pieksämäki (FI)
(74) Representative: Berggren Oy

(57) **Abstract**

The application relates to an embodiment of an attachable side light (100) for a motor vehicleconnectable trailer or towed device, which comprises a cast rubber frame (104) and a light element (114). The rubber frame comprises an attaching part (108) meant for attaching the rubber frame to the trailer or towed device and a protective frame part (112) meant for protecting the light element extending from it. The light element is adapted to produce at least one of the following lights: a colourless light visible from a direction of a front surface (103) of the side light, a yellow light visible from a direction of its end surface (102), and a red light visible from a direction of its rear surface (105). The light element installed in the protective frame part is protected from the direction of the front surface of the side light with a metallic front protective frame (124), which transfers stress caused by a mechanical blow to the rubber frame of the side light and which enables visibility of the colourless light.

## Description

### Technical field

The application generally relates to an attachable side light for a motor vehicle-connectable trailer or towed device.

### Background

Various attachable side lights equipped with outline marker lights, the use of which is mandatory in trailers exceeding a determined width, are available for the left and right sides of a forest trailer to be pulled after a tractor, e.g. a tractor equipped with a rear crane.

Side light solutions are traditionally manufactured from materials, e.g. metal or rigid plastic, which easily break in work use. The side lights can break for example when they hit for example a tree trunk, a branch or a rock. When the tractor and trailer return from the forest to a common road among other traffic, the broken side lights can cause accidents, danger situations and misunderstandings in traffic, for example when the tractor is stopped or working by the edge of a heavily trafficked road, when it is difficult to detect the vehicle combination of the tractor and trailer and difficult to outline its dimensions, if the side lights of the trailer are broken and the visibility is weak due to weather conditions or darkness.

Trailer manufacturers have tried to improve the durability of outline marker lights facilitating determination of the outer dimensions of trailers by using a flexible rubber structure for attaching them to the trailer, which has been shown to be a poor solution due to the weakness of the rubber structure attachment and the inexistent protection of the outline marker lights.

### Summary

One object of the invention is to solve problems of the prior art and to provide an easily installable side light meant for trailers and devices towed with a motor vehicle, which side light withstands extreme conditions and improves traffic safety.

One object of the invention is fulfilled by the side light and side light system according to the independent claims. Some embodiments of the invention are presented in said independent claims.

One attachable side light for a motor vehicle-connectable trailer or towed device comprises a cast rubber frame and a light element. The rubber frame comprises an attaching part meant for attaching the rubber frame to the trailer or towed device and a protective frame part meant for protecting a light element extending from it. The light element is adapted (fitted) to produce at least one of following lights: a colourless light visible from a direction of a front surface of the side light, a yellow light visible from a direction of its end surface, and a red light visible from a direction of its rear surface. The light element installed in the protective frame part is protected from the direction of the front surface of the side light with a metallic protective frame, which transfers stress caused by a mechanical blow to the rubber frame of the side light and which enables visibility of the colourless light.

One attachable side light system for a motor vehicle-connectable trailer or towed device comprises two side lights as described above and connectors meant for connecting them to the trailer or towed device.

### Description of figures

Exemplary embodiments of the invention are presented in more detail with the aid of the enclosed figures. The principle of the invention can naturally be varied within the protective scope defined by the claims, for example with regards to details and application areas of the implementation.

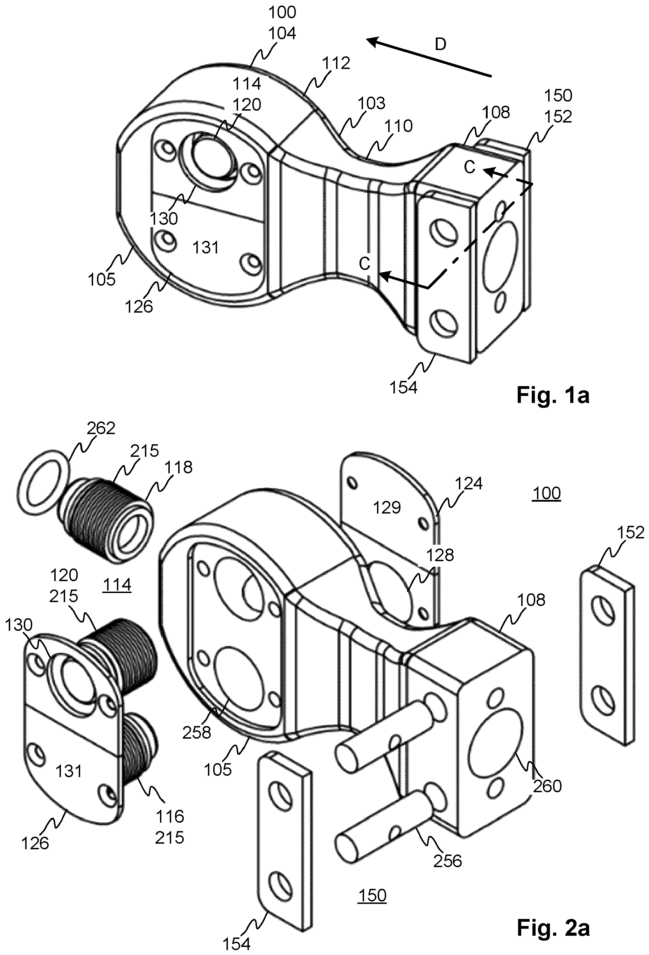

Fig. 1a-1b and 2a-2b present an LED (light emitting diode) side light 100 meant to be attached to a motor vehicle-connectable trailer or towed device seen from different directions, the purpose of which light is to warn other travellers about a vehicle combination on the road or in the immediate vicinity thereof, and simultaneously facilitate detecting the vehicle combination due to weak weather conditions or excess situational speed.

The motor vehicle is e.g. a motor work machine, e.g. a tractor, a bucket loader, a forestry machine or some other motor work machine, a crawler truck or some other vehicle, which is suitable for pulling a trailer, or a towable device.

A trailer is a towable vehicle connectable behind a vehicle, e.g. a tractor trailer, which does not have the power transmission necessary for movement, so, in order to move the trailer it has to be connected to a vehicle equipped for pulling a trailer.

A towable device is a towable vehicle connectable behind a vehicle, which is not meant for transporting people or goods, or for travelling. A towable device is e.g. an aggregate wagon, an aerial work platform, a kiosk wagon, a field cooker, or a mobile construction booth.

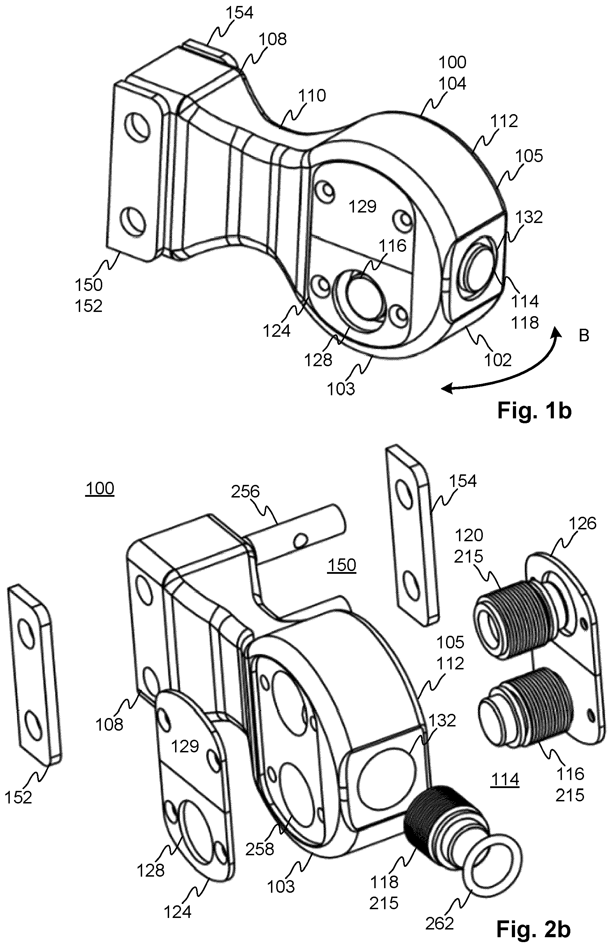

Fig. 1a and 2a present show a light 100, which is meant to be on the side of a trailer or towed device, on its left side, seen diagonally from behind and from the same direction as an exploded view. Fig. 1b and 2b present the light 100 correspondingly diagonally from the front. A light 100 meant for the right side is, related to the vertical plane, a mirror image of the light 100 meant for the left side.

Lights 100 are meant for use in a trailer or towed device as a pair formed by a left and right light 100, which pair is connected with connectors (connecting parts, means, cables, not presented in the figures) to the electric system of the vehicle combination comprising the trailer or towed device.

The light 100 includes a cast rubber frame (cast rubber shaft, frame, shaft) 104 manufactured from flexible rubber, which rubber frame prevents vibration coming from the metal structures of the trailer or towed device, caused by its movement, from being conducted into the structure of the light 100. Due to the rubber frame 104, the light 100 withstands extreme conditions, e.g. weather conditions and work conditions, e.g. mechanical blows, which are caused when the light 100 hits e.g. tree trunks, rocks or buildings, whereby the driver of the vehicle combination can trust that the light 100 is unbroken and functional when the vehicle combination comes for example from a forest or a yard back onto the road.

The rubber frame 104 is cast by injection molding with the aid of a mold manufactured for the purpose. The rubber material is for example ethylene propylene rubber (EPDM rubber) consisting of ethylene, propylene and diene monomers, the use temperature of which is typically -30°-100°C. The rubber frame 104 is manufactured so that its hardness, tensile strength, elongation at break, tear resistance and residual compression are in accordance with ISO 48, 37, 34-1C and 815 standards.

The rubber frame 104 comprises an attaching part 108 of the rubber frame and the whole side light 100, to be attached with attachments (attaching parts, attaching means) 150 to the trailer or towed device, and a protective frame part 112 extending therefrom in the direction of the arrow D, i.e. formed with casting as a continuation behind the narrowing part (narrowing, lightening) 110, which protective frame part is meant to form a frame structure around the LED light element 114, which protects and enables the light element 114 to be installed in the rubber frame 104.

The attachments 150 comprise for example metallic reinforcement plates (attaching plates) 152, 154 to be installed against the front and rear surface 103, 105 of the light 100, one of which plates is attached to the trailer or towed device, and attaching parts 256, e.g. screw bushing fasteners 256 attached with screws according to the figures or screw-nut connectors, by means of which, along with one of the reinforcement plates 152, 154, the light 100 is attached in a sturdy manner to the reinforcement plate 152, 154 already attached to the trailer or towed device, so that the light 100 can, if necessary, be detached from the attachment.

The rubber frame 104 is formed so according to the figures that the surface area of the area delimited by the borderlines of its cross-section C-C is by the attaching part 108, and in the same way also by the protective frame part 112, larger than by the narrowing part 110.

Due to the narrowing part 110 comprising rubber, the light 100 bends (stretches) in the directions of arrow B when the protective frame part 112 and the light element 114 protected by it hits some solid object, whereby due to the bending occurring in the direction of arrow B, the light 100 remains functional and does not break due to a rigid, inflexible structure.

The protective frame part 112 forms edges for the light element's 114 installation space 258, i.e. it partly delimits the installation space 258. Inside the protective frame part 112, the narrowing part 110 and the attaching part 108, there is a connecting channel (cable channel) 260 formed during the casting of the rubber frame 104, along which channel the connectors of the light element 114 are run protected from weather and mechanical blows through the light 100 from the attaching part 108 via the narrowing part 110 to the protective frame part 112 installation space 258, so that the light element 114 can be connected as part of the electric system of the trailer or towed device.

The light element 114 comprises at least one of the following: a first light part 116 producing (forming, establishing) a colourless (white) light, meant to be visible from the direction of the front surface 103; a second light part 118 producing a yellow (orange) light, meant to be visible from the direction of end surface 102; and a third light part 120 producing a red light, meant to be visible from the direction of the rear surface 105.

Each of the light parts 116, 118, 120 is protected with a rubber protection 215 and equipped with at least one LED component, e.g. one, two, three, four or more LED components.

The light element 114 can be formed so that it can, when connected to the electric system of a vehicle combination, function with at least one of the following properties: when used as a parking light, bright colourless light produced by the light part 116, meant to be visible from the direction of the front surface 103; when used as a side light, yellow light produced by the light part 118, meant to be visible from the direction of the end surface 102; and when used as an outline marker light, bright, yellow and red light produced by the light parts 116, 118, 120, meant to be visible from the directions of the front, end and rear surface 102, 103, 105.

The light element 114 can be formed so that it comprises all the light parts 116, 118, 120 producing a colourless, yellow, and red light; only the light part 116 producing only a colourless light; light parts 116, 118 producing a colourless and yellow light; only the light part 118 producing only a yellow light; light parts 118, 120 producing a yellow and red light; or only the light part 120 producing only a red light.

One example of versatile use of the light 100 is lighting of a long, e.g. tractor-pulled semi-trailer or a truck-pulled full trailer, whereby a light 100 comprising light parts 116, 118 is used on both sides of the front part of the semi- or full trailer to produce a colourless light in the direction of the front surface 103 (forward) and a yellow light in the direction of the end surface 102 (to the side), a light 100 comprising light part 118 is used on both sides in the middle part to produce a yellow light in the direction of the end surface 102, and a light 100 comprising light parts 118, 120 is used on both sides in the rear part to produce a yellow light in the direction of the end surface 102 and a red light in the direction of the rear surface 105 (backward).

Alternatively, in the case of the above example, all lights 100 can comprise all light parts 116, 118, 120, whereby the connections or controls are used to implement the above-described type of lighting for a semi- or full trailer.

The light 100 further includes metallic front and rear protective frames (front and rear protective frame plates) 124, 126 meant for protecting the light element 114, the purpose of which is to transfer stress caused by a mechanical blow directed toward the light 100 from the direction of the front and rear surfaces 103, 105 to the flexible rubber frame 104.

In accordance with the figures, the protective frame part and frames 112, 124, 126 delimit the installation space of the light element 114 in the rubber frame 104.

The protective frames 124, 126 are attached with attachments (not presented), e.g. screws, to the protective frame part 112, so that the front protective frame 124 equipped with at least one light opening 128 enabling visibility of the colourless light produced with the light part 116 of the light element 114 is attached to the front surface 103 toward the front part of the vehicle combination (trailer or towed device) and the rear protective frame 126 equipped with at least one light opening 130 enabling visibility of the red light produced by the light part 120 of the light element 114 respectively to the rear surface 105 toward the rear part of the trailer or towed device.

The attached protective frame 124 forms a part of the front surface 103 (is part of the front surface 103) and the attached protective frame 126 a part of the rear surface 105. The purpose of the attached protective frame 124 is additionally to support the light part 120 installed in the installation space 258 by its rear part with its uniform (solid) support surface 129 and the purpose of the attached protective frame 126 to support the installed light part 116 by its rear part with its uniform support surface 131.

The visibility of the yellow light produced with the light part 118 of the light element 114 is enabled with the protective frame part 112 of the rubber frame 104 equipped with at least one opening 132, which protective frame part is formed in the end surface 102 in the direction of the arrow D, away from the side of the trailer or towed device. The purpose is to additionally protect the light part 118 installed in the installation space 258 and support it with an O-shaped attaching ring (sealing ring) 262.

The light 100 additionally includes a front protection (not shown) manufactured from transparent plexiglass, e.g. acrylic or polycarbonate plate, which is detachably attachable to its front surface 103, on top of the protective frame 124, which front protection is meant, along with the metallic protective frame 124, to protect the light part 116 of the light element 114 from the direction of the front surface 103. The front protection is meant to be attached with attachments (attaching parts, means, not shown), e.g. screws, to the protective frame part 112, the protective frame 124 or to both, so that it covers the light opening 128 when working outside roads, and to be detached when the vehicle combination moves on a road.

The light 100 can additionally comprise also a rear protection (not presented) manufactured from transparent plexiglass, which is correspondingly detachably attachable to its rear surface 105, on top of the protective frame 126, in order to, along with the metallic protective frame 126, protect the light part 120 of the light element 114 from the direction of the rear surface 105. The rear protection is in the same way as the front protection meant to be attached with fasteners, e.g. screws, to the protective frame part 112, the protective frame 126 or to both, so that it covers the light opening 130.

Due to the flexibility of the rubber frame 104, especially its narrowing 110, and the rigid, inflexible protective structure of the protective frames 124, 126 surrounding the light element 114, the light 100 withstands extreme conditions very well.

## Claims

1. An attachable side light (100) for a motor vehicle-connectable trailer or towed device, comprising
a cast rubber frame (104) and
a light element (114),
where the rubber frame comprises an attaching part (108) meant for attaching the rubber frame to the trailer or towed device and a protective frame part (112) meant for protecting the light element extending from it, and
where the light element is adapted to produce at least one of following lights: a colourless light visible from a direction of a front surface (103) of the side light, a yellow light visible from a direction of its end surface (102), and a red light visible from a direction of its rear surface (105),
**characterized in that** the light element installed in the protective frame part is protected from the direction of the front surface of the side light with a metallic front protective frame (124), which transfers stress caused by a mechanical blow to the rubber frame of the side light and which enables visibility of the colourless light.

2. The side light according to the previous claim, where the rubber frame is formed so that it determines an installation space (258) of the light element and enables visibility of the colourless, yellow, and red light in the directions of the front, end and rear surface (102, 103, 105) of the side light when the light element is protected with the front protective frame.

3. The side light according to any of the previous claims, where the side light further comprises a transparent front protection detachably attachable to its front surface, which front protection is meant, together with the front protective frame, to protect the light element from the direction of the front surface.

4. The side light according to any of the previous claims, where the light element installed in the protective frame part is protected from the direction of the rear surface of the side light with a metallic rear protective frame (126) which transfers stress caused by a mechanical blow to the rubber frame of the side light and enables visibility of the red light, and with a transparent rear protection detachably attachable to the rear surface.

5. The side light according to any of the previous claims, where the light element is formed so that it is adapted to produce the colourless, yellow, and red lights; the colourless light; the colourless and yellow lights; the yellow light; the yellow and red lights; or the red light.

6. An attachable side light system for a motor vehicle-connectable trailer or towed device, **characterized in that** it comprises two side lights (100) according to any of the previous claims and connectors meant for connecting them to the trailer or towed device.
